(19) Europäisches Patentamt / European Patent Office / Office européen des brevets

(11) **EP 2 544 033 A1**

(12) **EUROPEAN PATENT APPLICATION**

(43) Date of publication:
**09.01.2013 Bulletin 2013/02**

(51) Int Cl.:
***G02B 6/00*** *(2006.01)*          *G02B 3/00* *(2006.01)*

(21) Application number: **12174978.2**

(22) Date of filing: **04.07.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **05.07.2011 JP 2011149159**

(71) Applicant: **Sumitomo Chemical Company, Limited Tokyo 104-8260 (JP)**

(72) Inventor: **Kawaguchi, Yujiro Ehime 792-0015 (JP)**

(74) Representative: **Jackson, Martin Peter
J A Kemp
14 South Square
Gray's Inn
London WC1R 5JJ (GB)**

(54) **Light guide plate, surface light source device, and transmission type image display device**

(57)     A light guide plate 40 receives light incident thereon through a light entrance surface 40a and emits the light from a light exit surface 40b. The light guide plate 40 has a plurality of lens units 43, each extending from the light entrance surface to a surface 41 d opposite thereto, on the light exit surface. The plurality of lens units are arranged in a row in a direction orthogonal to the extending direction. In a cross-section orthogonal to the extending direction in the lens unit, letting the u-axis be an axis passing both ends of the lens unit, the v-axis be an axis orthogonal to the u-axis while passing the center between the both ends 43a on the u-axis, and $w_a$ be the length of the lens unit along the u-axis, the form of the lens unit is represented by v(u) satisfying $0.95v_0(u) \leq v(u) \leq 1.05v_0(u)$ within the range of $-0.475w_a \leq u \leq 0.475w_a$, where $v_0(u)$ satisfies the following expression (1):

[Expression.1]

$$v_0(u) = h_a - \frac{8h_a\left(\dfrac{u}{w_a}\right)^2}{1 - k_a + \sqrt{\left(1 - k_a\right)^2 + 16k_a\left(\dfrac{u}{w_a}\right)^2}} \cdots (1)$$

where $h_a$ and $k_a$ are constants satisfying $0.4 \leq h_a/w_a \leq 0.7$, $-0.75 \leq k_a < 0$, and $1 \leq k_a + 4 \times (h_a/w_a) \leq 2$.

EP 2 544 033 A1

*Fig.2*

**Description**

BACKGROUND OF THE INVENTION

Field of the Invention

The present invention relates to a light guide plate, a surface light source device, and a transmission type image display device.

Description of the Related Art

In general, a transmission type image display device such as a liquid crystal display device has a surface light source device, arranged on the rear face side of a transmission type image display unit such as a liquid crystal display panel, for supplying backlight to the transmission type image display unit. As such a surface light source device, an edge light type surface light source device has been known (see, for example, Non Patent Literature: SASAKI Shinya, "3D support rekindles competition for higher resolution TVs," NIKKEI ELECTRONICS, August 23, 2010 issue, pp. 83-93.). The edge light type surface light source device comprises a light guide plate which transmits light and a light source, arranged beside the light guide plate, for supplying light to a side face of the light guide plate.

As a light source, point light sources such as light-emitting diodes have recently been in use from the viewpoints of low power consumption, no mercury use, and the like. When in use, a plurality of point light sources are typically arranged along a direction in which a side face of a light guide plate extends. In such a structure, a given point light source in the plurality of point light sources is turned on and off, thus enabling so-called local dimming and scanning. This improves contrast and reduces occurrences of afterimages (see, for example, Non Patent Literature: SASAKI Shinya, "3D support rekindles competition for higher resolution TVs," NIKKEI ELECTRONICS, August 23,2010 issue, pp. 83-93.).

SUMMARY OF THE INVENTION

However, light emitted from a point light source tends to become wider as it travels away therefrom, whereby crosstalk is likely to occur.

It is therefore an object of the present invention to provide a light guide plate, a surface light source device, and a transmission type image display device which can suppress crosstalk.

The light guide plate in accordance with the present invention is a light guide plate which receives light incident thereon through a light entrance surface and emits the light from a light exit surface intersecting the light entrance surface. The light guide plate in accordance with the present invention has a plurality of lens units, each extending from the light entrance surface to a surface opposite to the light entrance surface, disposed on the light exit surface. The plurality of lens units are arranged in a row in a direction orthogonal to the extending direction of the lens units. In a cross-section orthogonal to the extending direction in each of the plurality of lens units, letting the u-axis be an axis passing both ends of the lens unit, the v-axis be an axis orthogonal to the u-axis while passing the center between the both ends on the u-axis, and $w_a$ be the length of the lens unit along the u-axis, the cross-sectional form of each lens unit is represented by $v(u)$ satisfying the following expression (1) within the range of $-0.475 \times w_a \leq u \leq 0.475 \times w_a$:

[Expression.1]

$$0.95 v_0(u) \leq v(u) \leq 1.05 v_0(u) \qquad (1)$$

where $v_0(u)$ satisfies the following expression (2):

[Expression.2]

$$v_0(u) = h_a - \cfrac{8h_a\left(\cfrac{u}{w_a}\right)^2}{1 - k_a + \sqrt{(1 - k_a)^2 + 16k_a\left(\cfrac{u}{w_a}\right)^2}} \cdots (2)$$

where $h_a$ and $k_a$ are constants satisfying

$0.4 \leq h_a/w_a \leq 0.7$,
$-0.75 \leq k_a < 0.00$, and
$1.00 \leq k_a + 4.00 \times (h_a/w_a) \leq 2.00$.

In this structure, a plurality of lens units having the cross-sectional form represented by the expression (1) are formed on the light exit surface as mentioned above, whereby light incident on the light entrance surface of the light guide plate, if any, is likely to propagate in the extending direction of the lens units. Therefore, the light is restrained from widening when propagating from its entrance position through the light guide plate, whereby crosstalk can be reduced.
In the light guide plate in accordance with the present invention, $h_a$ may be a constant satisfying $0.4 \leq h_a/w_a \leq$ 0.6. In this case, the height of each lens unit is suppressed more than the width thereof. This makes it easy to form the lens units when molding the light guide plate from a resin or the like, for example.
In the light guide plate in accordance with the present invention, $k_a$ may be a constant satisfying $-0.75 \leq k_a \leq$ -0.25. This restrains a leading end part of each lens unit from becoming acute. As a result, the lens units can be formed easily when molding the light guide plate from a resin or the like, for example.
The surface light source device in accordance with the present invention comprises the above-mentioned light guide plate and a plurality of point light sources for supplying light to the light entrance surface of the light guide plate.
In this surface light source device, a plurality of lens units having the cross-sectional form represented by the expression (1) are formed on the light exit surface of the light guide plate therein as mentioned above. Therefore, light incident on the light entrance surface of the light guide plate from the point light sources, if any, is restrained from widening when propagating from its entrance position through the light guide plate. As a result, a greater amount of light is likely to propagate in front of the entrance position of the light, whereby crosstalk can be reduced.
The transmission type image display device in accordance with the present invention comprises the above-mentioned light guide plate, a plurality of point light sources for supplying light to the light entrance surface of the light guide plate, and a transmission type image display unit for displaying an image upon illumination with the light emitted from the light exit surface of the light guide plate.
In this transmission type image display device, a plurality of lens units having the cross-sectional form represented by the expression (1) are formed on the light exit surface of the light guide plate therein as mentioned above. Therefore, light incident on the light entrance surface of the light guide plate from the point light sources, if any, is restrained from widening when propagating from its entrance position through the light guide plate. As a result, a greater amount of light is likely to propagate in front of the entrance position of the light, whereby crosstalk can be reduced. Hence, local dimming and scanning can be performed more efficiently.
The present invention can provide a light guide plate, a surface light source device, and a transmission type image display device which can suppress crosstalk.

BRIEF DESCRIPTION OF THE DRAWINGS

Fig. 1 is a schematic view illustrating an outline structure of a transmission type image display device employing an embodiment of the light guide plate in accordance with the present invention;
Fig. 2 is a perspective view schematically illustrating the structure of the light guide plate depicted in Fig. 1;
Fig. 3 is a diagram illustrating an example of cross-sectional forms of lens units in the light guide plate;
Fig. 4 is a diagram for explaining a simulation model;
Fig. 5(a) is a diagram illustrating a light propagation state when lens units are formed, while Fig. 5(b) is a diagram illustrating a light propagation state when no lens units are formed;

Fig. 6 is a diagram for explaining an evaluation index for evaluating effects of lens units by illuminance;

Fig. 7 is a chart plotting evaluation indexes with respect to $h_a/w_a$ and $k_a$;

Fig. 8 is a chart illustrating the relationship between the evaluation index and $h_a/w_a$ and $k_a$ defining a cross-sectional form employable as a lens unit; and

Fig. 9 is a diagram illustrating another example of positional relationships between light source units and a light guide plate.

## DESCRIPTION OF THE PREFERRED EMBODIMENTS

In the following, embodiments of the present invention will be explained in detail with reference to the drawings. In the explanation of drawings, the same or equivalent parts will be referred to with the same signs while omitting their overlapping descriptions. Dimensional ratios in the drawings do not always coincide with those explained. Terms indicating directions such as "upper" and "lower" in the explanation are those used for convenience according to the states illustrated in the drawings.

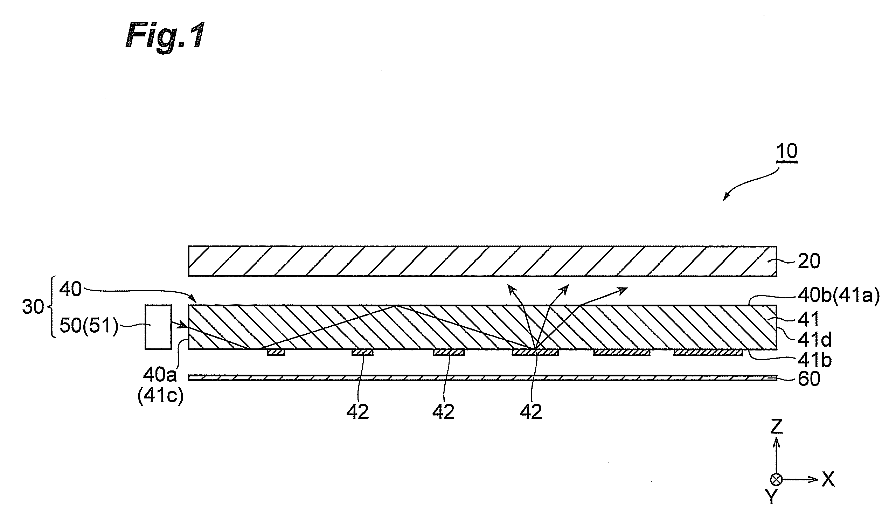

Fig. 1 is a schematic diagram illustrating an outline structure of a transmission type image display device employing an embodiment of the light guide plate in accordance with the present invention. Fig. 1 schematically illustrates a cross-sectional structure of a transmission type image display device 10 in an exploded manner. The transmission type image display device 10 can favorably be used as a display device for mobile phones and various electronic devices or a TV device.

The transmission type image display device 10 comprises a transmission type image display unit 20 and a surface light source device 30 for outputting surface light to be supplied to the transmission type image display unit 20. In the following, for convenience of explanation, the direction along which the transmission type image display unit 20 is arranged with respect to the surface light source 30 will be referred to as Z-axis direction as illustrated in Fig. 1. Two directions orthogonal to the Z-axis direction will be referred to as X-axis and Y-axis directions, respectively. The X-axis and Y-axis directions are orthogonal to each other.

The transmission type image display unit 20 displays an image upon illumination with surface light emitted from a light guide plate 40. An example of the transmission type image display unit 20 is a liquid crystal display panel as a polarizing plate laminate in which linear polarizing plates are arranged on both sides of a liquid crystal cell. In this case, the transmission type image display device 10 is a liquid crystal display device (or liquid crystal TV). As the liquid crystal cell and polarizing plates, those used in conventional transmission type image display devices such as liquid crystal display devices can be employed. Examples of the liquid crystal cell include liquid crystal cells of TFT and STN types. Examples of forms of the transmission type image display unit 20 seen as a plane (seen in the Z-axis direction) include oblong and square forms. The size of the transmission type image display unit 20 is determined as appropriate according to the size of the transmission type image display device 10.

The surface light source device 30 is an edge light type backlight unit for supplying backlight to the transmission type image display unit 20. The surface light source device 30 comprises the light guide plate 40 and a light source unit 50 which is arranged beside a light entrance surface 40a of the light guide plate 40.

The light source unit 50 has a plurality of point light sources 51 arranged like a line (arranged in the Y-axis direction in Fig. 1). An example of the point light sources 51 is a light-emitting diode. The distance (in the Y-axis direction) between the point light sources 51 adjacent to each other is typically 5 to 30 mm. For efficiently making light incident on the light guide plate 40, the light source unit 50 may be equipped with a reflector as a reflecting member, disposed on the opposite side of the light guide plate 40, for reflecting the light.

The surface light source device 30 may be equipped with a reflection unit 60 located on the opposite side of the light guide plate 40 from the transmission type image display unit 20. The reflection unit 60 is used for making the light emitted from the light guide plate 40 to the reflection unit 60 incident on the light guide plate 40 again. The reflection unit 60 may be a reflective sheet as illustrated in Fig. 1. The reflection unit 60 may be a mirror-finished bottom face of a housing of the surface light source device 30 accommodating the light guide plate 40.

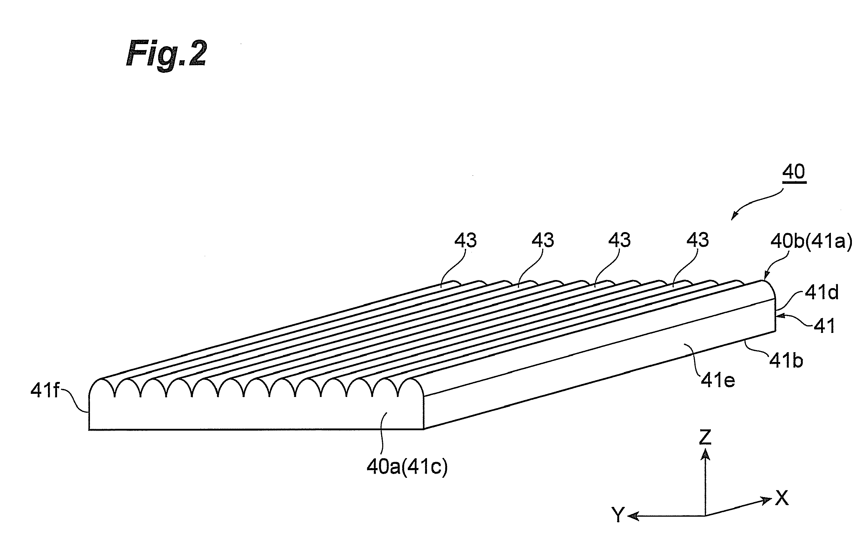

The light guide plate 40 will now be explained with reference to Figs. 1 and 2. Fig. 2 is a perspective view of an example of the light guide plate 40 illustrated in Fig. 1.

The light guide plate 40 receives light incident thereon through the light entrance surface 40a opposite to the point light source 51 and emits the light as surface light from a light exit surface 40b. The form of the light guide plate 40 seen as a plane is oblong, for example, but may be square as well. The size of the light guide plate 40 is selected in conformity to the screen size of the transmission type image display device (the size of the transmission type image display unit 20). An example of the size of the light guide plate 40 is at least 250 mm × 440 mm but not greater than 1020 mm × 1800 mm.

The light guide plate 40 has a planar body 41. The form of the body 41 seen as a plane is oblong, for example, but may be square as well. The body 41 is constituted by a light-transmitting material. The refractive index of the material constituting the body 41 is 1.46 to 1.62, for example. Examples of the material constituting the body 41 include transparent resin materials such as (meth)acrylic resins typified by polymethylmethacrylate resins (PMMA), polystyrene resins, cycloolefin resins, and polymethylpentene. Preferred among these exemplified resins are meth(acrylic) resins, those containing methylmethacrylate as their main polymer component in particular from the viewpoints of transparency and heat resistance.

The body 41 has a front face 41a as a first main face, a rear face 41b as a second main face opposite thereto, and four side faces 41c, 41d, 41e, 41f orthogonal to at least one of the front and rear faces 41a, 41b. In the mode illustrated in Fig. 1, the front face 41a serves as the light exit surface 40b of the light guide plate 40, while the side face 41c in the four side faces 41c, 41d, 41e, 41f acts as the light entrance surface 40a on which the light from the light source unit 50 is incident. The light incident on the light entrance surface 40a propagates through the body 41 while being totally reflected therein. The side faces 41c, 41d, 41e, 41f may be mirror-finished surfaces. However, the side faces 41c, 41d, 41e, 41f may be formed with cutouts and the like for attaching the light guide plate 40 to a housing in which the surface light source device 30 and the like are installed. The light entrance surface 40a may further be formed with a lens for converging or diverging light.

The rear face 41b may typically be a mirror-finished surface. However, the rear face 41b may be a rough surface subjected to roughening such as embossing within the range not deviating from the gist of the present invention.

The light guide plate 40 further has a plurality of reflective dots 42 as a reflection unit disposed on the rear face 41b side. The reflective dots 42 are white ink dots, for example, but may be microlenses as well. Under a condition different from the total reflection condition, each reflective dot 42 reflects to the light exit surface 40b the light entering from the light entrance surface 40a and propagating through the body 42. The plurality of reflective dots 42 have their arrangement pattern adjusted such that uniform surface light is efficiently emitted from the light exit surface 40b. The reflective dots 42 adjacent to each other may be either separated from each other or joined to each other. The reflection unit is exemplified by the reflective dots 42 here but may be anything as long as it can reflect the light guided through the body 41 to the light exit surface 40b under a condition different from the total reflection condition.

The front face 41a of the body 41, i.e., the light exit surface 40b of the light guide plate 40, is formed with a plurality of lens units 43. The number by which the lens units 34 are illustrated in Fig. 2 is for convenience in indicating that a plurality of lens units 34 are formed. The number of lens units 43 may be determined according to the size of the light guide plate 40, the pitch of the lens units 43, and the like, which vary depending on the size of the transmission type image display device 10. Each lens unit 43 extends from the side face 41c serving as the light entrance surface 40a to the side face 41d opposite thereto (in the X-axis direction in Fig. 1). That is, each lens unit 43 is a ridge. When the side face 41c is a flat surface orthogonal to the rear face 41b, the lens units 43 extend in a direction normal to the side face 41c. The plurality of lens units 43 are arranged in a row in a direction orthogonal to the extending direction of the lens units 43. In the extending direction of the lens units 43, their cross-sections orthogonal to the extending direction have substantially uniform forms. Two lens units 43, 43 adjacent to each other have ends 43a located at the same position in the X-axis direction.

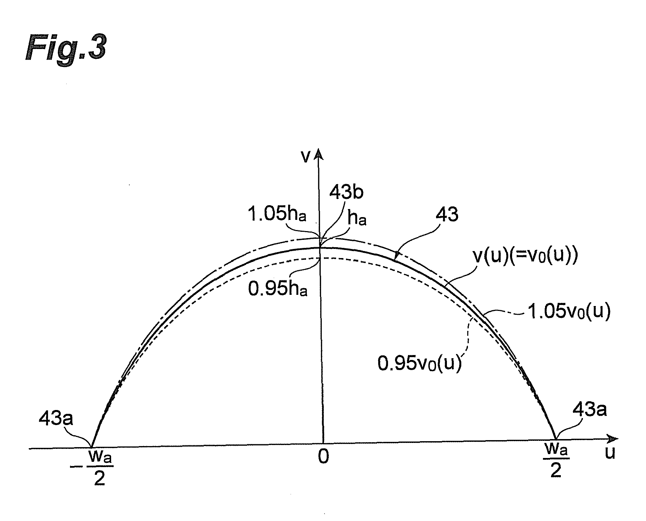

Fig. 3 is a diagram illustrating an example of cross-sectional forms of lens units orthogonal to their extending direction. In Fig. 3, a u-v coordinate system is set by taking a direction orthogonal to the extending direction of the lens units 43 as the u-axis. In this u-v coordinate system, the cross-sectional form of the lens unit 43 has both ends 43a, 43a on the u-axis. In the u-v coordinate system, the v-axis passes the center between the both ends 43a, 43a on the u-axis. In the mode illustrated in Figs. 1 and 2, the u direction corresponds to the Y-axis direction. The v direction corresponds to the Z-axis direction.

In the u-v coordinate system, the cross-sectional form of the lens unit 43 is represented by v(u) satisfying the following expression (3):

[Expression.3]

$$0.95v_0(u) \leq v(u) \leq 1.05v_0(u) \qquad (3)$$

where $v_0(u)$ satisfies the following expression (4):

[Expression.4]

$$v(u) = h_a - \frac{8h_a\left(\dfrac{u}{w_a}\right)^2}{1 - k_a + \sqrt{(1 - k_a)^2 + 16k_a\left(\dfrac{u}{w_a}\right)^2}} \cdots (4)$$

In the expression (4), $w_a$ is the width of the lens unit 43 in the u direction. Typically, the width $w_a$ is smaller than the distance between the point light sources 51 adjacent to each other. The width $w_a$ is 50 to 2000 $\mu$m, for example, preferably 100 to 1000 $\mu$m, more preferably 200 to 800 $\mu$m. Here, $h_a$ corresponds to the maximum height between the both ends 43a, 43a of the lens unit 43. In the expression (4), $k_a$ is a parameter indicating the acuteness (form) of the conic section represented by the expression (4) and represents the acuteness of the leading end part of the lens unit 43. Specifically, $k_a$ is such a parameter that the outer form of the lens unit 43 becomes parabolic, prism-like, and semielliptical when $k_a$ is 0, 1, and -1, respectively.

In the expression (4) concerning the cross-sectional form of the lens unit 43, the maximum height $h_a$ and acuteness $k_a$ are constants satisfying the following expressions (5) to (7). In other words, the lens unit 43 has a cross-sectional form based on the curve of the expression (4) defined by the maximum height $h_a$, width $w_a$, and acuteness $k_a$ selected so as to satisfy the expressions (5) to (7):

[Expression.5]

$$0.4 \leq h_a/w_a \leq 0.7 \qquad\qquad (5)$$

[Expression.6]

$$-0.75 \leq k_a < 0.00 \qquad\qquad (6)$$

[Expression.7]

$$1.00 \leq k_a + 4.00 \times (h_a/w_a) \leq 2.00 \qquad (7)$$

In the expressions (5) to (7), $h_a/w_a$ corresponds to the aspect ratio of the lens unit 43. In the following, $h_a/w_a$ will also be referred to as aspect ratio.

Fig. 3 illustrates a case where $v = v_0(u)$ as an example of cross-sectional forms of lens units. Specifically, the cross-sectional form illustrated in Fig. 3 represents an example of $v_0(u)$ where the aspect ratio ($h_a/w_a$) and acuteness $k_a$ are 0.40 and -0.4, respectively. As illustrated in Fig. 3, the lens unit 43 may have a profile which is symmetric about the v-axis. For indicating conditions satisfied by the lens unit 43, Fig. 3 also illustrates profiles represented by $0.95v_0(u)$ and $1.05v_0(u)$ with broken and dash-single-dot lines, respectively. The cross-sectional form of the lens unit 43 is only required to satisfy the expression (3) and thus may be a profile passing a region between respective profiles represented by $0.95v_0(u)$ and $1.05v_0(u)$ when $v_0(u)$ is determined with respect to a given width $w_a$. The lens unit 43 also has such an outer form that the angle formed between the tangent plane to the lens unit 43 and the front face 41a (u-axis) of the body 41 monotonously decreases from the both ends 43a, 43a of the lens unit 43 to the leading end part 43b.

The foregoing explanation assumes that the cross-sectional form of the lens unit 43 is represented by $v(u)$ satisfying the expression (3). In view of manufacturing errors near the both ends 43a, 43a of the lens unit 43 and the like, however, it will be sufficient if the cross-sectional form of the lens unit 43 is represented by $v(u)$ satisfying the expression (3) within the range where $-0.475w_a \leq u \leq 0.475w_a$.

The plurality of lens units 43 have substantially the same cross-sectional form among them. However, the respective cross-sectional forms of the plurality of lens units 43 may vary as long as they satisfy the expression (3).

Thus constructed light guide plate 40 may be contained with additives such as UV absorbers, antistatics, antioxidants, processing stabilizers, flame retardants, lubricants, and light diffusers, for example, within the range not deviating from the gist of the present invention. The light guide plate 40 (the body 41 in particular) may have a multilayer structure instead of the single-layer structure. In this embodiment, the thickness of the light guide plate 40 having the lens unit 43 is identical to the thickness of the body 41. The thickness of the body 41, which is the distance between the apex of the lens unit 43 and the rear face 41b, is typically 0.5 to 8 mm, preferably 1 to 6 mm, more preferably 1.5 to 4 mm.

The light guide plate 40 can be manufactured by making the body 41 and then forming a reflection unit (reflective dots 42 in Fig. 1) on the rear face 41b of the body 41. The body 41 can be made by extrusion, casting, injection molding, or machining out from a plate, for example. The body 41 can be made by forming the lens units 43 from a photopolymer or the like on a plate. Specifically, when forming the body 41 by extrusion, for example, a plate is initially made by extrusion. Subsequently, using a form roll having a periphery formed with a transfer mold corresponding to the plurality of lens units 43, the transfer mold is transferred to the front face of the plate, so as to manufacture the body having the plurality of lens units 43. The lens units 43 may be formed on the plate by a photopolymer or machining out as mentioned above. The reflective dots 42 serving as the reflection unit are formed by inkjet printing, screen printing, or laser processing, for example. It is not always necessary to form the reflection unit after making the body 41. The light guide plate 40 can directly be manufactured by forming the body 41 and the reflection unit integrally with each other by injection molding, for example.

In thus constructed light guide plate 40, light emitted from the point light sources 51 enters the light guide plate 40 through the light entrance surface 40a. The light having entered the light guide plate 40 propagates to the side face 41d opposite to the light entrance surface 40a while being totally reflected. When impinging on the reflective dot 42 during the propagation, the light is randomly reflected thereby under a condition different from the total reflection condition, so as to be emitted out of the light exit surface 40b. Since a part of the light guided through the light guide plate 40 exits from the light exit surface 40b, surface light can be emitted from the light exit surface 40b.

Since the light exit surface 40b of the light guide plate 40 is formed with a plurality of lens units 43 each having a cross-sectional form satisfying the expression (3) and extending in the X-axis direction in Figs. 1 and 2, the light entering from the point light source 51 converges into the extending direction of the lens units 43 (the X-axis direction in Figs. 1 and 2). Therefore, the light is likely to propagate in the extending direction of the lens units 43. This reduces the crosstalk between respective light components emitted from the point light sources 51, 51 adjacent to each other, whereby the transmission type image display device 10 employing the light guide plate 40 can execute local dimming, scanning, and the like more effectively. Similarly, the transmission type image display device 10 employing the surface light source device 30 including the light guide plate 40 can execute local dimming, scanning, and the like more effectively. As a result, the transmission type image display device 10 including the light guide plate 40 can improve contrast and reduce afterimages, thereby raising its image quality.

At the aspect ratio ($h_a/w_a$) of 0.7 or less, the lens unit 43 becomes flatter and thus is easier to mold. When forming the lens unit 43 by transferring a transfer mold for forming the lens unit 43 to a plate, for example, it improves the transfer ratio of the transfer mold. From this viewpoint, the aspect ratio ($h_a/w_a$) is more preferably at least 0.4 but not greater than 0.6.

The leading end of the lens unit 43 becomes too acute when the acuteness $k_a$ is 0 or greater; whereas, when the acuteness $k_a$ is below -0.75, the lens unit 43 tends to increase angles on its skirt sides, thereby becoming harder to mold.

The lens unit 43 having the acuteness $k_a$ satisfying the expression (6), by contrast, is easier to mold. When forming the lens unit 43 by using a transfer mold, for example, the transfer ratio of the transfer mold improves as in the case of the aspect ratio. From this viewpoint, the acuteness $k_a$ is more preferably at least -0.75 but not greater than -0.25.

The fact that light from the point light sources 51 is easier to propagate in the extending direction of the lens units 43 when the light guide plate 40 is equipped with the lens units 43 will now be explained with reference to results of simulations.

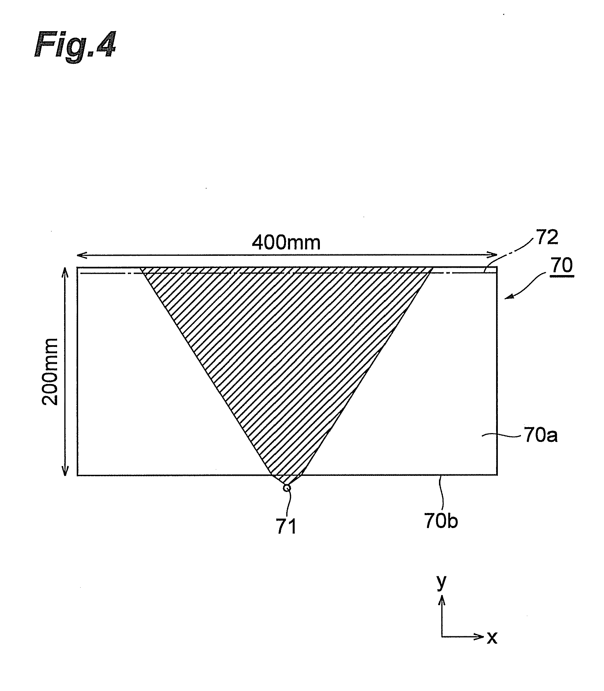

Fig. 4 is a diagram for explaining a simulation model. Employed as the light guide plate in the simulation was an optical sheet 70 having an oblong form when seen as a plane as illustrated in Fig. 4. In the simulation, no reflection unit was formed on the rear face of the optical sheet 70 (the surface opposite to the front face 70a of the optical sheet 70). In the form seen as a plane illustrated in Fig. 4, the optical sheet 70 had lengths of 400 mm and 200 mm at longer and shorter sides, respectively. In the following, the longer and shorter side directions will be referred to as x-axis and y-axis directions, respectively, as illustrated in Fig. 4 for convenience of explanation. The refractive index of the optical sheet 70 was 1.49.

One point light source 71 was arranged so as to oppose a side face 70b of the optical sheet 70. In this structure, the side face 70b corresponds to the light entrance surface 40a of the optical sheet 70 serving as the light guide plate. The distance between the point light source 71 and the side face 70b was 0.2 mm. In the simulation, the point light source 71 was configured such as to have an orientation distribution of +68° and a light emission characteristic yielding an illumination area with a diameter of 1 mm on the side face 70b.

The three side faces other than the side face 70b opposing the point light source 71 were assumed to be absorptive surfaces. In the optical sheet 70, the form of the front face 70a serving as the light exit surface was adjusted, so as to perform simulations 1 and 2. Fig. 4 is provided with a hatching for schematically illustrating the light emitted from the point light source 71.

In the simulations 1 and 2, the thickness of the optical sheet 70 was 4 mm. The thickness of the optical sheet 70 was assumed to be the distance between the apex of the lens unit 43 and the rear face of the optical sheet 70 and the distance between the front face 70a and the rear face when the lens units 43 were formed on the front face 70a and not, respectively.

Simulation 1

In the simulation 1, light propagation states were studied in a case where the lens units 43 were formed on the front face 70a (simulation 1a) and a case where the lens units 43 were not formed on the front face 70a, i.e., the front face 70a was a flat surface (simulation 1b).

In the simulation 1a, a plurality of lens units 43 each extending in the y direction (normal to the side face 70b) were arranged in a row in the x-axis direction on the front face 70a. The plurality of lens units 43 were arranged with no gaps therebetween in the x-axis direction. The width $w_a$ of the lens unit 43, i.e., the lens pitch, was 0.5 mm. The cross-sectional form of the lens unit 43 was represented by the expression (4). That is, v(u) representing the cross-sectional form was assumed to be identical to $v_0(u)$. The u and v directions in the expression (4) correspond to the x-axis and y-axis directions illustrated in Fig. 4, respectively. In the lens unit 43 configured in the simulation 1a, the aspect ratio ($h_a/w_a$) and acuteness $k_a$ were assumed to be 0.4 and -0.4, respectively. The form of this lens unit 43 satisfies the expressions (5) to (7).

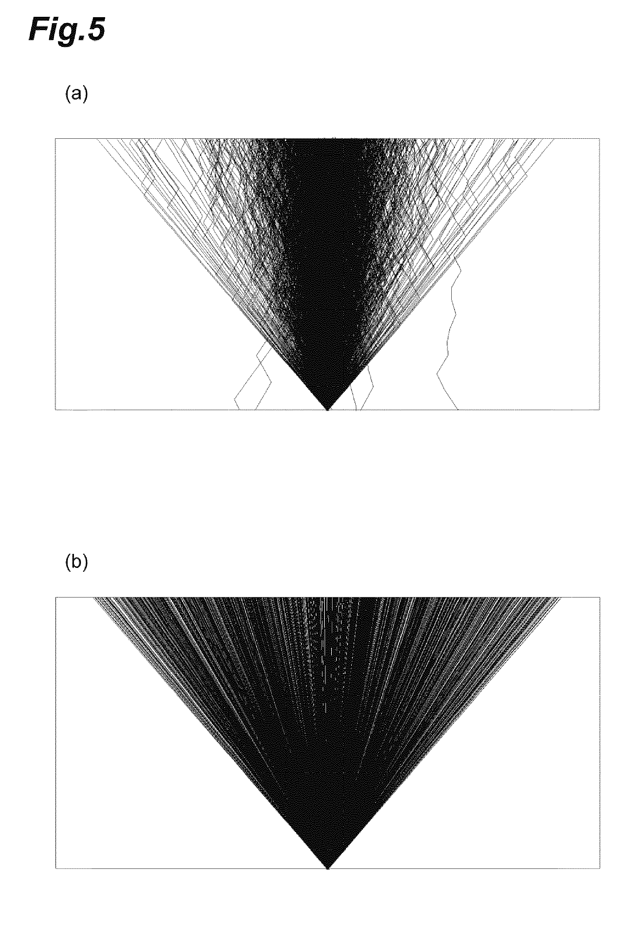

Fig. 5(a) is a diagram illustrating the results of simulation 1a. Fig. 5(b) is a diagram illustrating the results of simulation 1b. The conditions of simulations 1a and 1b are the same except for different forms of the front face 70a. When Figs. 5(a) and 5(b) are compared with each other, it can be understood that light converges more in front of the light entrance position on the side face 70b in the case where the lens units 43 satisfying the expressions (5) to (7) are formed (the case of Fig. 5(a)) than in the case where no lens units 43 are formed (the case of Fig. 5(b)). That is, providing the lens units 43 can restrain the light from widening. Hence, local dimming and the like can be performed efficiently.

Simulation 2

In the simulation 2, a plurality of lens units 43 each extending in the y-axis direction were arranged in a row in the x-axis direction on the front face 70a. The plurality of lens units 43 were arranged with no gaps therebetween in the x-axis direction. The width $w_a$ of the lens unit 43, i.e., the lens pitch, was 0.5 mm. The cross-sectional form of the lens unit 43 was represented by the expression (4) as in the simulation 1a. In the simulation 2, the aspect ratio ($h_a/w_a$) and acuteness $k_a$ were changed, so as to modify the cross-sectional form of the lens unit 43 in various ways, and the illuminance on the side of the side face 70c opposite to the side face 70b was calculated.

The illuminance was calculated by the following method. A dummy surface 72 (a surface indicated by a dash-single-dot line in Fig. 4) was placed at 0.01 mm from the side face 70c. It was assumed that the dummy surface 72 was divided into $100 \times 1$ meshes (meshes of 4 mm), while a light-receiving device was installed in each mesh, and the number of light beams received by each light-receiving device was taken as the illuminance of the light.

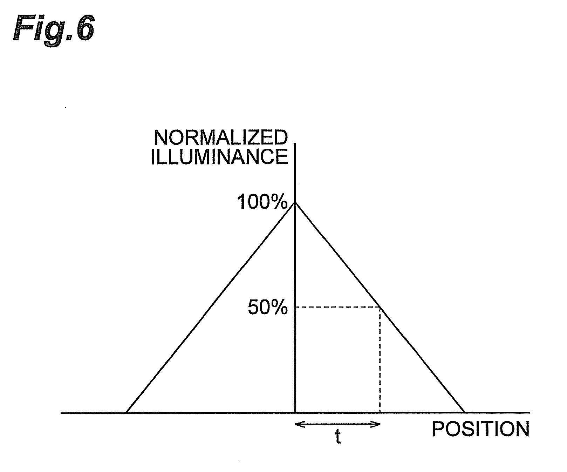

Each illuminance was normalized with the maximum value of illuminance on the dummy surface 72, i.e., each illuminance was plotted with respect to its position while the maximum value of illuminance was taken as 100%, so as to yield an illuminance distribution. Then, as illustrated in Fig. 6, an illuminance distribution width t where the illuminance became 50% was taken as an evaluation index. Fig. 6 is a diagram for explaining the evaluation index for evaluating effects of the lens units 43 by the illuminance. The abscissa and ordinate in Fig. 6 indicate the position and normalized illuminance, respectively. As illustrated in Fig. 6, the illuminance distribution width serving as the evaluation index is the width of one of both sides at the position exhibiting the illumination of 100% and corresponds to the half width at half maximum.

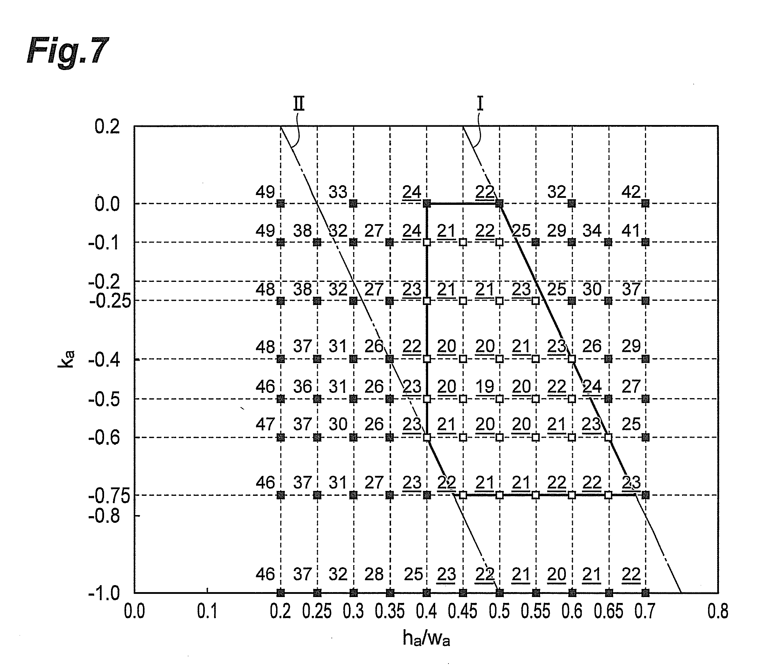

Fig. 7 is a chart plotting evaluation indexes for forms of lens units defined by the aspect ratio and acuteness. The abscissa and ordinate in Fig. 7 indicate the acuteness $k_a$ and the aspect ratio ($h_a/w_a$), respectively. Each value in Fig. 7 indicates the half width at half maximum (irradiation distribution width) t, which is an evaluation index, in terms of mm. Line I indicated by a dash-single-dot line in Fig. 7 represents $k_a = -4.00(h_a/w_a) + 2.00$. Line II indicated by a dash-single-dot line in Fig. 7 represents $k_a = -4.00(h_a/w_a) + 1.00$. Solid lines in Fig. 7 indicate boundaries of a region defined by the expressions (5) to (7). While $k_a$ is less than 0 in the expression (6), a line where $k_a = 0$ is partly represented by a solid line for convenience of illustration.

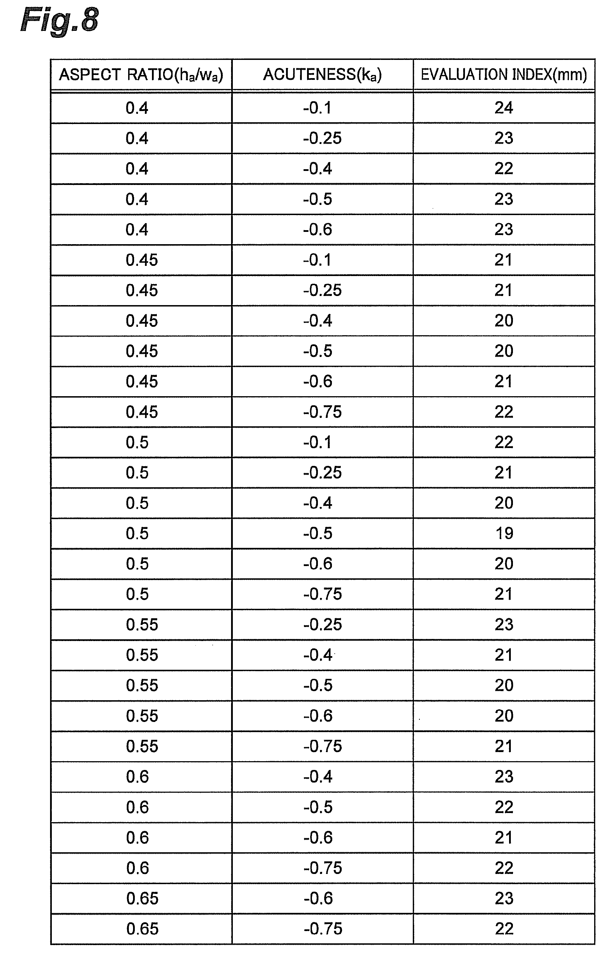

In Fig. 7, values of illuminance distribution width t at 24 mm or less are underlined, while plotted points where the illuminance distribution width t is 24 mm or less on the solid-line boundaries of the region and therewithin are indicated by whitened squares. Combinations of aspect ratio ($h_a/w_a$) and acuteness $k_a$ satisfying the expressions (5) to (7) corresponding to the plotted points indicated by the whitened squares and the evaluation index t obtained when employing the lens unit 43 defined by these combinations are as represented in Fig. 8. Fig. 8 is a chart illustrating the relationship between the evaluation index and the aspect ratio ($h_a/w_a$) and acuteness ($k_a$) defining the cross-sectional form employable as a lens unit.

As illustrated in Figs. 7 and 8, the evaluation index t can be 24 mm or less when the lens unit 23 satisfying the expressions (5) to (7) is formed on the light exit surface 40b.

In the simulation 2, a case where no lens unit 43 was formed on the front face 70a was similarly evaluated for comparison. The value of evaluation index t in this case was 149.2 mm.

It can therefore be seen from the results of simulation 2 that forming the lens unit 43 satisfying the expressions (5) to (7) on the front face 70a can greatly lower the evaluation index t, i.e., restrain light from widening, so as to allow a greater amount of light to propagate into the extending direction of the lens unit 43.

As the results of simulations 1a and 2 mentioned above illustrate, the light guide plate 40 having the light exit surface 40b formed with the lens units 43 each having a cross-sectional form satisfying the expressions (5) to (7) can propagate light from the point light sources 51 while converging it into the extending direction of the lens units 43. This suppresses the crosstalk as mentioned above, whereby local dimming and scanning can be executed efficiently.

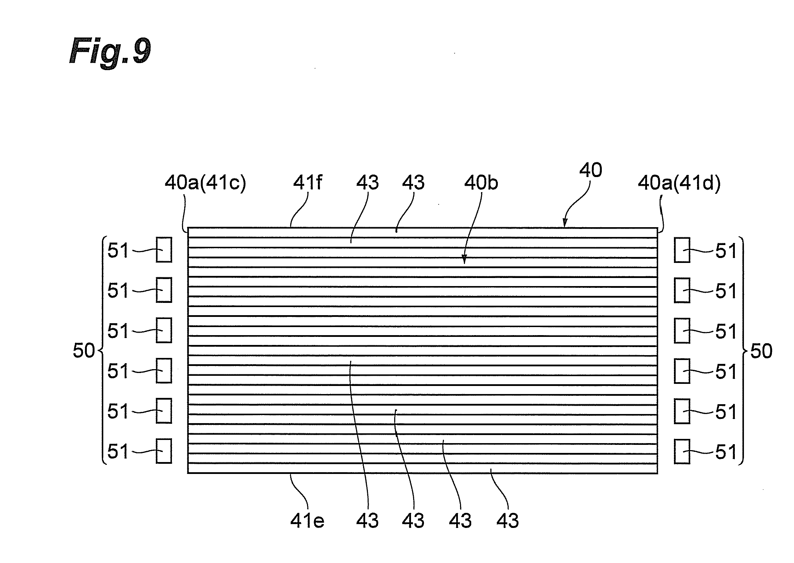

Though an embodiment of the present invention has been explained in the foregoing, the present invention is not limited to the above-mentioned embodiment but can be modified in various ways within the range not deviating from the gist of the invention. The mode illustrated in Fig. 1 employs the side face 41c as the light entrance surface, while arranging the light source unit 50 (point light sources 51) beside the side face 41c. However, the light source unit 50 may be arranged beside the side face 41e or 41f employed as the light entrance surface. In this case, a plurality of lens units 43, each extending in the Y-axis in Figs. 1 and 2, are arranged in a row in the X-axis direction. The side face 41d can be employed as the light entrance surface as in the case where the side face 41c is employed as the light entrance surface. The light guide plate has only one light entrance surface in the mode illustrated in Fig. 1. However, the light guide plate may have two light entrance surfaces. In this case, one side face and a side face opposite thereto serve as light entrance surfaces. For example, as illustrated in Fig. 9, respective light source units 50 may be arranged beside the side faces 41c, 41d, so that these side faces 41c, 41d serve as light entrance surfaces. Fig. 9 is a diagram illustrating this alternative example of positional relationships between the light source unit and the light guide plate. Fig. 9 is a drawing of the light guide plate 40 as seen from the light exit surface 40b side. When placing the respective light source units 50 beside the side faces 41c, 41d, the lens units 43 are arranged as in Figs. 1 and 2. In another example, respective light source units 50 are disposed beside the side faces 41e, 41f, so that these side faces 41e, 41f can serve as light entrance surfaces. The arrangement of lens units 43 in this case is the same as in the case where one of the side faces 41e, 41f is employed as a light entrance surface.

The above-mentioned embodiment has explained that the respective ends of two lens units 43, 43 adjacent to each other are located at the same position in the X-axis direction. However, the two adjacent lens units 43, 43 may be provided with flat parts within the range not deviating from the gist of the present invention.

**Claims**

1.   A light guide plate for receiving light incident thereon through a light entrance surface and emitting the light from a light exit surface intersecting the light entrance surface,
the light guide plate having a plurality of lens units, each extending from the light entrance surface to a surface opposite to the light entrance surface, disposed on the light exit surface;
wherein the plurality of lens units are arranged in a row in a direction orthogonal to the extending direction of the lens units; and
wherein, in a cross-section orthogonal to the extending direction in each of the plurality of lens units, letting the u-axis be an axis passing both ends of the lens unit, the v-axis be an axis orthogonal to the u-axis while passing the center between the both ends on the u-axis, and $w_a$ be the length of the lens unit along the u-axis, the cross-sectional form of each lens unit is represented by v(u) satisfying the following expression (1) within the range of $-0.475 \times w_a \leq u \leq 0.475 \times w_a$:

[Expression.1]

$$0.95v_0(u) \leq v(u) \leq 1.05v_0(u) \qquad (1)$$

where $v_0(u)$ satisfies the following expression (2):

[Expression.2]

$$v_0(u) = h_a - \frac{8h_a\left(\dfrac{u}{w_a}\right)^2}{1 - k_a + \sqrt{(1 - k_a)^2 + 16k_a\left(\dfrac{u}{w_a}\right)^2}} \cdots (2)$$

where $h_a$ and $k_a$ are constants satisfying

$$0.4 \le h_a/w_a \le 0.7,$$

$$-0.75 \le k_a < 0.00,$$

and

$$1.00 \le k_a + 4.00 \times (h_a/w_a) \le 2.00.$$

2. A light guide plate according to claim 1, wherein $h_a$ is a constant satisfying $0.4 \le h_a/w_a \le 0.6$.

3. A light guide plate according to claim 1 or 2, wherein $k_a$ is a constant satisfying $-0.75 \le k_a \le -0.25$.

4. A surface light source device comprising:

    the light guide plate according to one of claims 1 to 3; and
    a plurality of point light sources for supplying light to the light entrance surface of the light guide plate.

5. A transmission-type image display device comprising:

    the light guide plate according to one of claims 1 to 3;
    a plurality of point light sources for supplying light to the light entrance surface of the light guide plate; and
    a transmission type image display unit for displaying an image upon illumination with the light emitted from the light exit surface of the light guide plate.

Fig.1

10

20

40b(41a)
41
41d
41b
60

42

42

42

40
50(51)
30

40a
(41c)

Z
Y
X

*Fig.2*

EP 2 544 033 A1

# Fig.3

*Fig.4*

# Fig.5

(a)

(b)

# Fig.6

EP 2 544 033 A1

# Fig.7

# Fig.8

| ASPECT RATIO($h_a/w_a$) | ACUTENESS($k_a$) | EVALUATION INDEX(mm) |
|---|---|---|
| 0.4 | -0.1 | 24 |
| 0.4 | -0.25 | 23 |
| 0.4 | -0.4 | 22 |
| 0.4 | -0.5 | 23 |
| 0.4 | -0.6 | 23 |
| 0.45 | -0.1 | 21 |
| 0.45 | -0.25 | 21 |
| 0.45 | -0.4 | 20 |
| 0.45 | -0.5 | 20 |
| 0.45 | -0.6 | 21 |
| 0.45 | -0.75 | 22 |
| 0.5 | -0.1 | 22 |
| 0.5 | -0.25 | 21 |
| 0.5 | -0.4 | 20 |
| 0.5 | -0.5 | 19 |
| 0.5 | -0.6 | 20 |
| 0.5 | -0.75 | 21 |
| 0.55 | -0.25 | 23 |
| 0.55 | -0.4 | 21 |
| 0.55 | -0.5 | 20 |
| 0.55 | -0.6 | 20 |
| 0.55 | -0.75 | 21 |
| 0.6 | -0.4 | 23 |
| 0.6 | -0.5 | 22 |
| 0.6 | -0.6 | 21 |
| 0.6 | -0.75 | 22 |
| 0.65 | -0.6 | 23 |
| 0.65 | -0.75 | 22 |

EP 2 544 033 A1

**Fig.9**

Europäisches
Patentamt
European
Patent Office
Office européen
des brevets

**EUROPEAN SEARCH REPORT**

Application Number

EP 12 17 4978

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/052118 A1 (KUDO JUNICHIRO [JP] ET AL) 8 March 2007 (2007-03-08) * paragraph [0031] - paragraph [0039]; figure 1 * ----- | 1,2 | INV. G02B6/00 ADD. G02B3/00 |
| X | US 2008/068862 A1 (SHIMURA TAKASHI [JP]) 20 March 2008 (2008-03-20) * paragraph [0065] - paragraph [0077]; figures 1-5 * * paragraph [0101] - paragraph [0104]; figures 18-19 * * paragraph [0097] - paragraph [0100]; figures 15-17 * ----- | 1,2,4,5 | |
| X | US 2004/109663 A1 (OLCZAK EUGENE [US]) 10 June 2004 (2004-06-10) * paragraph [0020] - paragraph [0023]; figures 1-3 * ----- | 1-3 | |

TECHNICAL FIELDS
SEARCHED        (IPC)

G02B

The present search report has been drawn up for all claims

| Place of search | Date of completion of the search | Examiner |
|---|---|---|
| Berlin | 8 November 2012 | A. Jacobs |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 12 17 4978

This annex lists the patent family members relating to the patent documents cited in the above-mentioned European search report.
The members are as contained in the European Patent Office EDP file on
The European Patent Office is in no way liable for these particulars which are merely given for the purpose of information.

08-11-2012

| Patent document cited in search report | Publication date | Patent family member(s) | Publication date |
|---|---|---|---|
| US 2007052118 A1 | 08-03-2007 | JP 4506733 B2 | 21-07-2010 |
| | | JP 2007090859 A | 12-04-2007 |
| | | KR 20070026264 A | 08-03-2007 |
| | | TW I305750 B | 01-02-2009 |
| | | US 2007052118 A1 | 08-03-2007 |
| US 2008068862 A1 | 20-03-2008 | DE 102007017771 A1 | 27-12-2007 |
| | | JP 2007311325 A | 29-11-2007 |
| | | US 2008068862 A1 | 20-03-2008 |
| US 2004109663 A1 | 10-06-2004 | AU 2003291109 A1 | 30-06-2004 |
| | | BR 0316589 A | 04-10-2005 |
| | | CA 2507644 A1 | 24-06-2004 |
| | | CN 1720469 A | 11-01-2006 |
| | | CN 101256252 A | 03-09-2008 |
| | | EP 1570305 A2 | 07-09-2005 |
| | | JP 2006509259 A | 16-03-2006 |
| | | KR 20050085418 A | 29-08-2005 |
| | | US 2004109663 A1 | 10-06-2004 |
| | | US 2007035964 A1 | 15-02-2007 |
| | | WO 2004053538 A2 | 24-06-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SASAKI SHINYA.** 3D support rekindles competition for higher resolution TVs. *NIKKEI ELECTRONICS,* 23 August 2010, 83-93